# EUROPEAN PATENT SPECIFICATION

(11) **EP 2 336 008 B1**
(45) Date of publication and mention of the grant of the patent: **18.07.2012**
(21) Application number: 09179701.9
(22) Date of filing: 17.12.2009
(51) Int. Cl.: B62D 51/02, B62D 51/04, B66F 9/075

(54) **Industrial truck comprising a pivotal platform with vertical suspension**
Flurförderfahrzeug, das eine Drehplattform mit vertikaler Aufhängung umfasst
Camion industriel doté d'une plate-forme pivotante avec une suspension verticale

(43) Date of publication of application: 22.06.2011
(73) Proprietor: BT Products AB, 595 81 Mjölby (SE)
(72) Inventor: Andersson, Lars-Gunnar, 582 31 Linköping (SE)
(74) Representative: Börlin, Maria

(56) References cited:
- EP-A1- 1 205 427
- EP-A1- 2 014 605
- JP-A- 2002 145 128

## Description

### TECHNICAL FIELD

The present invention relates to an industrial truck comprising a pivotal driver's platform that is pivotal from an upright position to a lowered position.

### BACKGROUND ART

Industrial trucks, for example tiller arm trucks may be provided with a driver's platform that is pivotal from an upright position to a lowered position so that the driver can ride on the truck while standing on the platform. The platform is also generally provided with suspension in order to absorb shocks that are generated when the truck is driven over bumps or on uneven ground.

JP2002145128 shows a tiller arm truck with a pivotal platform which can be pivoted downwards until a forward part of the platform presses against a spring mounted plate. When a driver is standing on the platform the spring counteracts the weight of a driver so that the platform is held in an essential level position. When the truck encounters a bump, the spring allows the platform to swing a few degrees around its pivotal axis whereby suspension is provided for the platform. A similar pivotal platform is also shown in JP 2002128485.

Studies have shown that the most ergonomic favourable working position for the driver is to stand on an essentially horizontal platform.

In the above described platforms, the spring must be accurately dimensioned with respect to the weight of the driver so that proper suspension of the platform is provided and so that the platform is balanced in a level position when a driver stands on the platform. This provides a problem since drivers of different weight may use the truck. A further problem is that the spring may loose its force due to wear. If the force of the spring is too weak, or the driver too heavy, the platform will be forced into a position where it is in an angle with the horizontal plane. The driver will then be standing on a sloping platform, which over time could lead to injuries.

A further type of pivotal platform for an industrial truck is described in EP0485257 A1. The platform comprises an arrangement for locking the platform in a horizontal position. The platform further comprises a cushioning carpet. However, in EP0485257 no suspension of the platform is provided which leaves the driver exposed to shocks when the truck is driven on uneven ground.

Thus, it is an object of the present invention to provide an industrial truck with an improved pivotal platform which protects the driver from shocks and ensures an ergonomically correct working position for drivers of different weight.

### SUMMARY OF THE INVENTION

According to the invention this object is achieved by an industrial truck comprising a pivotal driver's platform that is pivotal from an upright position to a lowered position characterized in that the truck comprises a supporting element to which the platform is pivotally attached, a means for blocking the platform in a predetermined lowered position from further downwards directed pivoting, wherein the supporting element, when the platform is in its lowered position, is resiliently movable in the vertical direction.

The resilient suspension of the platform is thereby advantageously achieved, whereby it is ensured that the angular position of the platform can be blocked in an ergonomically correct position for the driver. The risk that the driver of the truck is injured due to incorrect working position is thereby minimized. The platform arrangement is compact and may be installed in existing truck types.

According to one alternative, the supporting element is resiliently supported by spring means.

Preferably, the spring means comprises one or more helical springs. Such springs provides good suspension over time and are easy to install in truck.

According to one alternative, the spring means are progressive springs. This provides an advantage when drivers of different weight are using the truck since the driver, regardless of weight, will experience the same suspension of the platform. A further advantage is that the suspension of the platform remains essentially the same regardless if the truck is driven on a smooth surface or on a surface which is uneven.

According to one alternative, the spring means comprises several springs, having different spring rates and/or lengths. Suitable suspension of the platform may thereby be provided for drivers of different weight or for different types of surfaces.

The spring means for supporting the supporting element may be arranged on a frame which is attached to the truck.

The frame may comprise spring holding means for holding the springs of the spring means to the frame.

The supporting element may comprise at least one space for accommodating the spring means. A very compact arrangement of the parts in the platform may thereby be achieved.

Preferably, the platform comprises attachment elements for pivotally attaching the platform to the supporting element and the supporting element comprises at least one mechanical stop, which is arranged to block the attachment element in a predetermined lowered position. The arrangement provides for stable and secure blocking of the platform in the predetermined lowered position.

Alternatively, the platform comprises attachment elements for pivotally attaching the platform to the supporting element wherein the attachment elements comprises a mechanical stop for blocking the platform in a predetermined lowered position by interaction with the supporting element. Since the mechanical stop is located on the attachment elements of the platform the size of the supporting element is reduced and therefore occupies less space in the truck.

Preferably, the movement of the supporting element is guided in the vertical direction by guide elements. The guide elements ensure that the supporting element only moves in the vertical direction when a driver is present on the platform of the truck.

An operating element for pivoting the platform may be arranged between the supporting element and a forward part of the platform.

Preferably, the operating element is a linear actuator.

The linear actuator may be a gas spring arranged to pivot the platform to the upright position. The linear actuator may also be an electric ball screw linear actuator or a hydraulic linear actuator arranged to pivot the platform to the lowered position and to pivot the platform to the upright position. The linear actuator provides an ergonomically advantage since the need for cumbersome manual operation of the platform is reduced.

According to one alternative, the supporting element comprises an arm which extends in the vertical direction, wherein one end of the operating element is attached to the arm and the other end of the operating element is attached to a protruding portion of an attachment of the platform.

### BRIEF DESCRIPTION OF THE DRAWINGS

Figure 1 shows schematically a side view of an industrial truck comprising a pivotal driver's platform according to the invention.
Figure 2 is an exploded view showing the parts of the platform according to a first embodiment of the invention.
Figure 3a is a perspective view of the supporting element according to a first embodiment of the invention.
Figure 3b is a side view of the supporting element according to the first embodiment of the invention.
Figure 3c is a side view of the supporting element according to the invention comprising an alternative mechanical stop.
Figure 4 shows an alternative where several springs of different length and/or spring rate supports are arranged to support the platform.
Figure 5 is an exploded view, showing the frame, the supporting element, the spring means and the guide elements of the first embodiment in detail.
Figure 6 shows the assembled platform of the first embodiment in a lowered, horizontal position.
Figure 7a and 7b show schematically side views of the first embodiment comprising two alternative operating elements for pivoting the platform.
Figure 8 shows schematically the platform of the first embodiment in a raised, vertical position.
Figure 9 shows schematically the platform of the first embodiment in a lowered, horizontal position with the weight of a driver acting on the platform.

### DETAILED DESCRIPTION

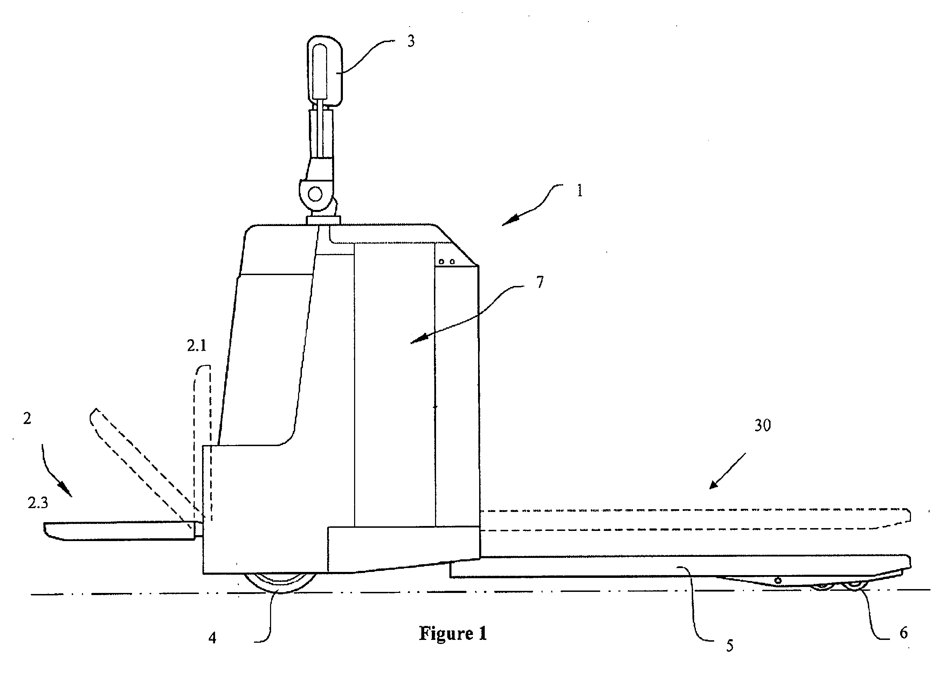

Figure 1 illustrates schematically an industrial truck according to the invention with a pivotal platform for the driver. The truck illustrated in figure 1 is a so called tiller arm truck. This truck type, also known as stacker or order pick truck, is generally known in the art and its features will therefore only be briefly described. The truck comprises a housing 7 in which the motor, the hydraulics and the control system of the truck are located (these parts are not shown in figure 1). The truck comprises a drive wheel 4 which is propelled by the motor, forward support wheels 6 that are arranged on support arms 5 and a load engaging means 30 that can be raised and lowered. The truck 1 further comprises a platform 2 which is pivotal between an upright position 2.1 and a lowered, horizontal position 2.3. A steering means 3 e.g. a tiller arm is arranged such that the driver can steer the truck while walking behind the truck or while standing on the platform when the platform is pivoted into a lowered position. Although a tiller arm truck is described in figure 1, it is obvious that the invention also is applicable to other truck types with driver's platforms that are pivotal between an upright position and a lowered position.

Above and in the following is by "horizontal position" meant that the platform is parallel to the ground, when the truck is positioned on even ground. By upright position" is meant that the platform is essential parallel to the motor housing of the truck.

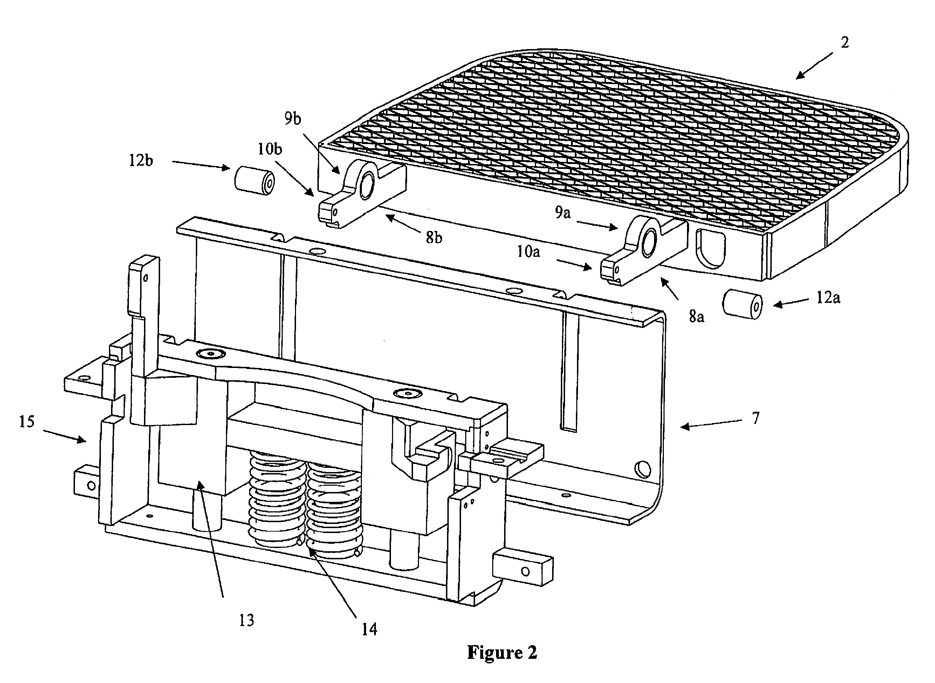

Figure 2 shows the principal parts of the truck which relates to the pivotal platform. These parts are: a platform 2 for the driver, a supporting element 13 in which the platform is pivotally attached, spring means 14 for providing suspension to the supporting element 13 and a frame 15 that is fixed to the truck and in which the spring means 14 and the supporting element 13 are supported. Figure 2 also shows a portion of the motor housing 7 of the truck.

Following is a detailed description of the principal parts that relates to the pivotal platform.

### The platform

The platform 2 (see figure 2) has a generally flat surface onto which a driver may stand while driving the truck. The platform is manufactured from a suitable construction material e.g. steel or fibre reinforced plastics and is dimensioned to withstand the weight of a driver.

The platform 2 comprises two attachment elements 8a and 8b which protrudes from the front edge of the platform. Each attachment element 8a and 8b comprises a ring-shaped opening 9a, 9b for receiving a bearing shaft 12a, 12b by which the platform is pivotally attached to the supporting element 13. Half of the ring-shaped opening is located in the attachment element and the other half of the ring-shaped opening is delimited by a protruding, semicircle-shaped portion of the attachment element. Each attachment element 8a, 8b further comprises a protruding portion 10a and 10b for interacting with a mechanical stop in the supporting element 13 in order to block the platform in a predetermined lowered position. The protruding portions 10a, 10b extend from the ring-shaped opening in a direction away from the platform 2.

The length of the attachment elements 8a, 8b and the protruding portion 10a, 10b as well as the position of the ring-shaped opening 9a, 9b on the attachment element depend on the construction of the truck and the design of the supporting element. For example, the openings 9a and 9b may also be holes through the centre of the attachment elements 8a and 8b.

### The supporting element

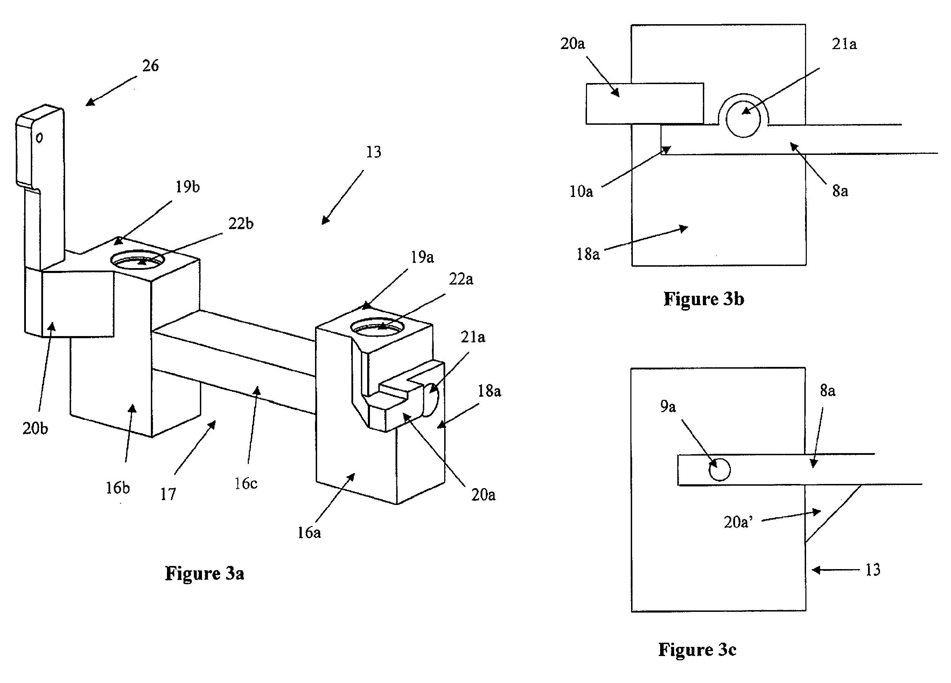

Figure 3a shows a perspective view of the supporting element 13 in detail. The supporting element is of H-shape and comprises two legs 16a, 16b of essential rectangular cross-section. The legs are interconnected by a yoke 16c which also is of rectangular cross-section. The legs 16a and 16b of the supporting element each comprises a top surface 19a, 19b and side surfaces 18a, 18b. Figure 3 shows side surface 18a on leg 16a, an identical side surface 18b is provided on leg 16b. It is obvious that the legs and the yoke may be of other cross-section than rectangular, for example circular or oval.

Each of the side surfaces comprises a boring to which the platform 2 can be attached by the bearing shafts. In figure 3 a boring 21 a is shown on side surface 18a, however an identical boring is also comprised in side surface 18b. The supporting element 13 may comprise one or several spaces, located on the underside of the supporting element for accommodating spring means. The supporting element 13 in figure 3a comprises one space 17 for accommodating a spring means. The spaces are of a shape suitable for accommodating a spring means, for example rectangular or cylindrical shape.

A mechanical stop for blocking the platform in a predetermined, preferably horizontal, position is provided on each side surface of the supporting element. Figure 3a shows an mechanical stop 20a on the side surface 18a. An mechanical stop 20b is also provided on the other side surface. The mechanical stop 20b is partly shown in figure 3a. The mechanical stops protrude a distance from the side surfaces. The distance is dimensioned so that the mechanical stop blocks the attachment elements 8a, 8b of the platform 2. The mechanical stop may for example be a rectangular block which is attached to the side surfaces by welding or by screws. The mechanical stop may also be an integral part of the supporting element. The mechanical stop could also have other forms than a rectangular block, for example could one or several pins be arranged to protrude from the side surfaces of the supporting element 13 in order to block the platform in a predetermined position.

Figure 3b shows the position of the mechanical stop 20a, which has the form of a rectangular block, on the side surface 18a of the supporting element 13. As can be seen in figure 3b the mechanical stop 20a is, with respect to the platform 2, arranged on the opposite side of the boring 21 a. The underside of the mechanical stop is level with the centre of the boring 21 a and its thickness dimension matches the thickness of the protruding portions 10a of the attachment elements 8a of the platform 2.

Figure 3c shows an alternative solution in which the mechanical stop 20a' is wedge shaped, i.e. triangular and is arranged on the attachment element 8a of the platform 2. The thickness of the mechanical stop is dimensioned so that it contacts the front side of the supporting element 13 when the platform is lowered thereby blocking the platform in the lowered position. Figure 3c further shows an opening 9a through the centre of the attachment element 8a.

The supporting element 13 may further comprise through going holes 22a and 22b in which guide rods may be inserted. The through going holes 22a and 22b extends from the top surface 19a, 19b of each leg 16a and 16b of the supporting element 13 to the undersides of respective leg 16a, 16b.

The supporting element 13 may also comprise an arm 26 to which an operating element may be attached for pivoting the platform. In figure 3a the arm 26 extends in the vertical direction however, depending on the construction of the truck the arm 26 may also extend in other directions than vertical.

Depending on the design of the truck, the supporting element 13 may be of other shape than H-shape. For example, the supporting element may be a block of rectangular shape or rounded shape, e.g. cylindrical or oval.

### The spring means

Spring means 14 are provided for resiliently supporting the platform 2, see figure 2. The spring means 14 may for example be one or more helical springs as shown in figure 2. The spring means could also be one or more cup springs, wave springs or another type of pressure spring. The spring means 14 are dimensioned, e.g. the length and the force of the spring means, such that adequate suspension is provided when a driver is standing on the platform.

According to one alternative, the spring means 14 is progressive. In a progressive spring, the stiffness of the spring varies with the load that is applied to the spring. Thus, the spring has a low stiffness when a small load is applied to the spring and a high stiffness when a large load is applied to the spring.

The progressive spring means is preferably helical and may be of various configuration. According to one alternative, the distance between the coils of the spring varies. According to another alternative, the dimension of the spring wire varies throughout the length of the spring. According to a further alternative, the diameter of the spring coils varies so that the spring obtains a conical shape.

According to a preferred embodiment, the distance between the coils in both ends of the spring is narrower than the distance between the coils in the centre of the spring.

In uncompressed condition, this spring has a first low spring rate. When a small load is applied to the spring, all the coils are first equally compressed according to the spring rate of the spring. An adequate suspension for the small load is therefore provided. If the load is increased, the coils at the ends of the spring come into contact with each other and become inactive. At this point only the coils in the centre of the spring are active during compression. The spring therefore has a higher spring rate due to the greater distance between these coils. The spring thus also provides adequate suspension for the increased load.

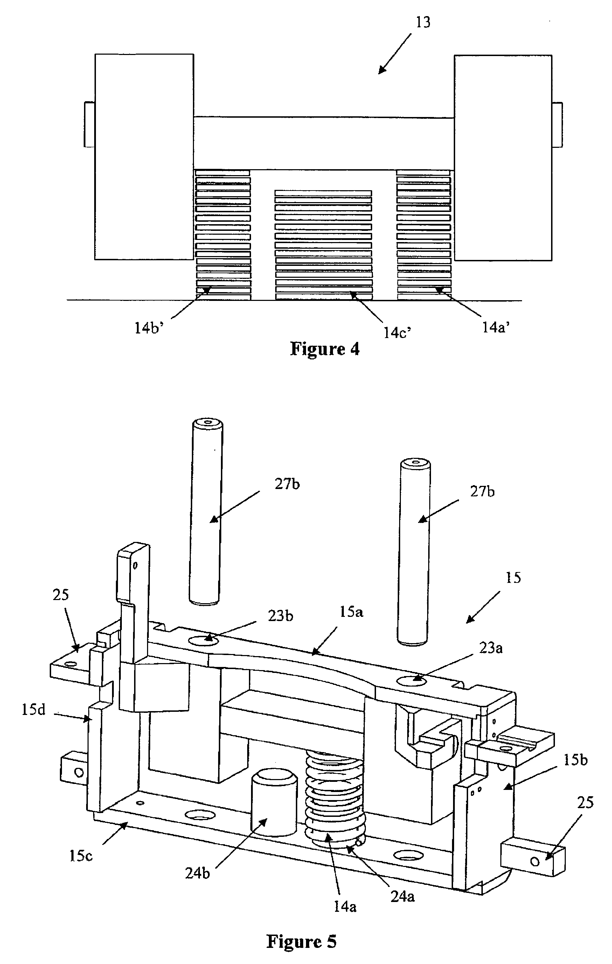

The spring means may also comprise several springs which have different spring rates and/or lengths. For example, as shown in figure 4, three springs can be arranged next to each other. The spring 14c' in the centre is shorter and may have a spring rate that is different than the spring rate of the springs 14a' and 14b'. When a light weight driver is present on the platform only springs 14a' and 14b' are compressed whereby a suitable suspension for the lightweight driver is provided. When a heavy driver is present on the platform, also spring 14c' is compressed whereby a stronger suspension is provided.

### The frame

A frame 15 is provided in which the supporting element 13 and the spring means 14 are arranged. Figure 5 shows a detailed view of the frame. The frame 15 has a generally rectangular shape and consists of two flat horizontal beams 15a, 15c and two flat vertical beams 15b and 15d that are welded or riveted together. The frame may also be cast in one piece. The frame 15 comprises fastening means 25, e.g. openings by which the frame can be firmly attached to the motor housing of the truck, e.g. by bolts.

The upper and lower horizontal beams 15a, 15c comprise openings 23a, 23b through which guide rods 27a, 27b may be inserted.

The frame 15 further comprises holding means 24 for the spring means 14. The spring holding means may for example be cylinders that are arranged on the lower horizontal beam 15d whereby the spring means are slid over the cylinders. Figure 5 shows two spring holding means 24a and 24b. A spring 14a is slid over spring holding means 24a. The other spring (spring 14b) has been omitted to show the shape and location of the spring holding means 24b.

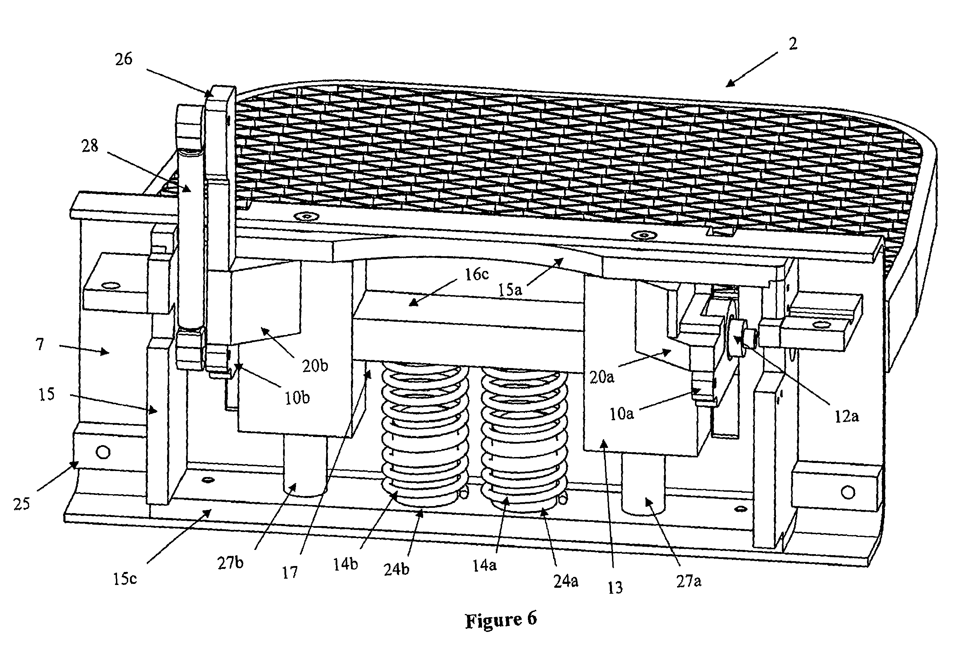

An operating element may be provided to pivot the platform. According to one alternative, see figure 6, the operating element is a gas spring 28. The upper end of the gas spring is pivotally attached to the arm 26 on the supporting element 13. The lower end of the gas spring 28 is pivotally attached to the protruding portion 10b of the attachment element of the platform 2. In figure 6 the platform is in a lowered position, i.e. a force is acting on the platform. In this position the gas spring is compressed by the force acting on the platform. When the force is removed, the gas spring 28 expands and presses the protruding portion 10b of the platform 2 downwards. The platform then swing around the bearing shafts into the upright position.

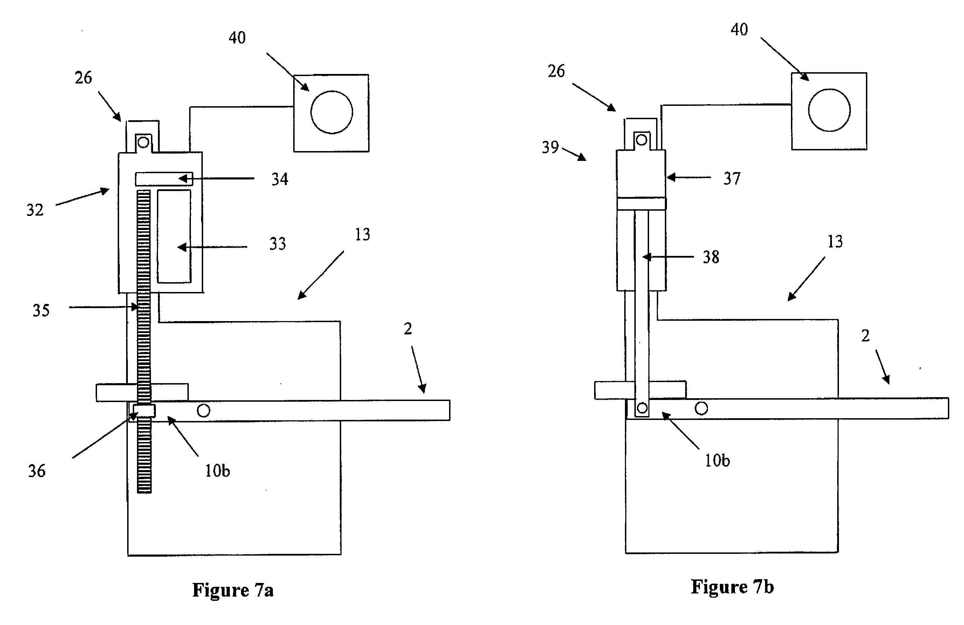

According to a second alternative, see figure 7a, the operating element is an electrical ball screw linear actuator 32. The ball screw linear actuator 32 comprises an electrical motor 33, a gear unit 34, a threaded shaft 35 and a ball bearing 36 that is arranged on the threaded shaft. The gear unit 34 is arranged to transfer the rotational movement from the motor to the threaded shaft 35. The upper end of the ball screw linear actuator is pivotally attached to the supporting arm 13. The ball bearing 36 is pivotally attached to the protruding portion 10b of the platform 2. The electrical motor 33 is connected by wires to a control 40 on the truck, e.g. one or two buttons or a control stick. By actuating the control 40 the driver of the truck may control the motor 33 to rotate the threaded shaft 35 clockwise or counter clockwise. The ball bearing 36 then runs upwards or downwards on the threaded shaft, whereby the platform is lowered or raised.

According to a further alternative, see figure 7b, the operating element is a hydraulic linear actuator 39. The hydraulic linear actuator 39 comprises a hydraulic cylinder 37 and a hydraulic piston 38. The upper end of the hydraulic cylinder 37 is attached to the supporting arm 13 and the lower end of the hydraulic piston 38 is pivotally attached to the protruding portion 10b of the platform 2. The hydraulic piston is connected to the hydraulic system of the truck (not shown). A control 40, e.g. one or two buttons or a control stick, is connected to the hydraulic system so that the movement of the piston can be controlled. By actuating the control 40, the driver can control the hydraulic cylinder to move the piston downwards or upwards whereby the platform is lowered or raised.

The assembled pivotal platform will be described in the following with reference to figure 6. As can be seen in figure 6, the frame 15 is firmly fastened to the inner side of the motor housing 7 of the truck by bolts through the openings 25 in the frame.

On the lower horizontal beam 15c of the frame are two springs 14a, 14b, e.g. helical springs arranged. The springs 14a, 14b are slid over cylinders 24a, 24b that protrudes from the lower horizontal beam 15c. The springs are thereby securely held on the beam 15c.

The supporting element 13 is arranged in the frame 15 so that the springs 14a, 14b extend into the space 17 of the supporting element 13 and so that that the springs are in contact with the underside of the yoke 16c of the supporting element 13. The supporting element is thereby resiliently supported by the springs 14 so that the supporting element 13 in unloaded state, i.e. when no driver is present on the platform, is lifted by the springs 14a, 14b and is pressed against the upper horizontal beam 15a of the frame 15.

Two guide rods 27a, 27b are inserted through the holes in the supporting element. The guide rods 27a and 27b are fixed in the openings in the upper and lower beams 15a, 15c of the frame 15. The supporting element 13 may slide vertically upwards and downwards on the guide rods 27a, 27b but is prevented from moving in lateral direction.

The platform 2 is attached to the supporting element 13 by bearing shafts which are inserted through the ring-shaped openings of the attachment elements of the platform into the borings in the supporting element 13. In figure 6 is shown a bearing shaft 12a that is inserted through the ring-shaped opening in the attachment elements of the platform into the boring of the supporting element 13. An identical bearing shaft is inserted through the ring-shaped opening of the other attachment element of the platform into the other boring of the supporting element.

The bearing shafts permit the platform to pivot, i.e. to swing from an upright vertical position to a lowered predetermined, preferably horizontal, position. As can be seen in figure 6, the platform is lowered into a horizontal position, in which the protruding portions 10a, 10b of the attachment elements of the platform 2 are in contact with the mechanical stops 20a and 20b of the supporting element 13 so that the platform 2 is blocked from further downwards directed pivoting.

Figure 6 also shows a gas spring 28 is for pivoting the platform to an upright position. The upper end of the gas spring is pivotally attached to the arm 26 on the supporting element 13. The lower end of the gas spring 28 is pivotally attached to the protruding portion 10b of the platform 2. Instead of the gas spring 28 may as described other types of linear actuators be provided, for example an electric ball screw linear actuator or a hydraulic linear actuator.

In the following is the function of the platform described.

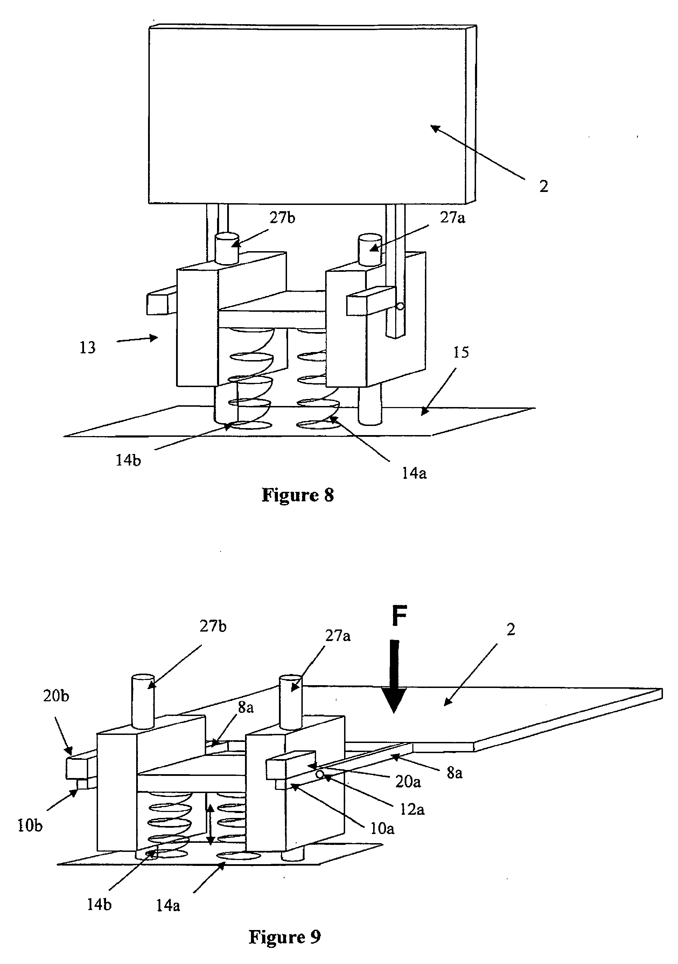

Figure 8 shows schematically the platform in an upright position. The platform 2 may be pivoted manually into the upright position or by the force of the gas spring. Alternatively, the platform is raised by the electric or hydraulic linear actuator. When the platform is in the upright position, the springs 14a, 14b, which are arranged on the frame 15, lifts the supporting element 13.

Figure 9 shows the platform pivoted into a lowered horizontal position with the force F acting on the platform. The force F corresponds to the weight of the driver.

The platform is lowered into the horizontal position in that the driver manually swings the platform downwards. Alternatively, the platform is lowered by the linear actuator. The platform thereby pivots around the bearing shafts by which the platform is attached to the supporting element 13. Figure 9 shows the attachment element 8a which is attached to the supporting element 13 by a bearing shaft 12a, however as described above the other attachment elements 8b of the platform is also attached to the supporting element 13 by an identical bearing shaft. The platform pivots downwards until the protruding portions 10a and 10b of the attachment elements 8a and 8b of the platform comes into contact with the undersides of the mechanical stops 20a and 20b of the supporting element 13. The mechanical stops then blocks the protruding portions 10a and 10b of the platform so that the platform is blocked in the horizontal position from further pivoting.

When the driver is present on the platform, the weight F of the driver puts a momentum on the platform. However, the platform is prevented from further pivoting by the mechanical stops 20a and 20b.

The weight of the driver forces the supporting element 13 to slide downwards on the guide rods 27a, 27b against the force of the springs 14a, 14b which are compressed. The guide rods 27a, 27b prevent the supporting element 13 from moving in other directions than the vertical direction. If the truck runs over a bump, the movement of the platform is absorbed by the spring means.

When the driver leaves the platform, the supporting element 13 is lifted by the springs 14a, 14b towards the upper horizontal beam of the frame. The platform may then be pivoted into an upright position.

Although particular embodiments have been disclosed herein in detail, this has been done for purposes of illustration only, and is not intended to be limiting. Features of the disclosed embodiments may be combined. In particular, it is contemplated by the inventor that various substitutions, alterations, and modifications may be made to the invention within the scope of the appended claims. For instance, the supporting element may be suspended in draw spring means from the upper horizontal beam of the frame. Dampening means may be provided on the upper horizontal beam to prevent shocks from occurring due to direct contact between the supporting element and the frame. It is possible to use one, central guide rod instead of two guide rods. It is also possible to guide the supporting element in two U-shaped profiles that are arranged between the upper and lower beam of the frame. In this case the supporting element comprises protruding guide element which slides in profiles.

## Claims

1. An industrial truck (1) comprising a pivotal driver's platform (2) that is pivotal from an upright position to a lowered position **characterized in that** the truck (1) comprises a supporting element (13) to which the platform (2) is pivotally attached, a means (20a, 20b, 20a', 20b') for blocking the platform (2) in a predetermined lowered position from further downwards directed pivoting, wherein the supporting element (13), when the platform is in its lowered position, is resiliently movable in the vertical direction.

2. The industrial truck according to claim 1, wherein the supporting element (13) is resiliently supported by spring means (14).

3. The industrial truck according to claim 2, wherein the spring means (14) comprises one or more helical springs.

4. The industrial truck according to any of the claims 2 or 3, wherein the spring means (14) are one or more progressive springs.

5. The industrial truck (1) according to any of claims 2 -4, wherein the spring means (14) for supporting the supporting element (13) are arranged on a frame (15) which is attached to the truck.

6. The industrial truck (1) according to claim 5, wherein the frame (15) comprises spring holding means (24) for holding the spring means (14).

7. The industrial truck (1) according to any of claims 2-6, wherein the supporting element (13) comprises at least one space (17) for accommodating the spring means (14).

8. The industrial truck according to any of claims 1 - 7, wherein the platform (2) comprises attachment elements (8a, 8b) for pivotally attaching the platform (2) to the supporting element (13) and the supporting element (13) comprises at least one mechanical stop (20a, 20b), which is arranged to block the attachment elements (8a, 8b) in a predetermined lowered position.

9. The industrial truck according to any of claims 1 -7, wherein the platform comprises attachment elements (8a, 8b) for pivotally attaching the platform to the supporting element (13) wherein the attachment elements (8a, 8b) comprises a mechanical stop (20a', 20b') for blocking the platform (2) in a predetermined lowered position by interaction with the supporting element (13).

10. The industrial truck (1) according to any of claims 1 - 9, wherein the movement of the supporting element (13) is guided in the vertical direction by guide elements (27a, 27b).

11. The industrial truck (1) according to any of claims 1-10, wherein an operating element (28, 32, 39) for pivoting the platform (2) is arranged between the supporting element (13) and a forward part of the platform (2).

12. The industrial truck (1) according to claim 11, wherein the operating element (28, 32, 39) is a linear actuator.

13. The industrial truck (1) according to claim11 or 12, wherein the linear actuator is a gas spring (28) arranged to pivot the platform to the upright position or wherein the linear actuator is an electric ball screw linear actuator (32) or a hydraulic linear actuator (39) arranged to pivot the platform to the lowered position and to pivot the platform to the upright position.

14. The industrial truck (1) according to claims 11-13, wherein the supporting element (13) comprises an arm (26) which extends in the vertical direction, wherein one end of the operating element (28, 32, 39) is attached to the arm (26) and the other end of the operating element (28, 32, 39) is attached to a protruding portion (10a, 10b) of an attachment (8a, 8b) of the platform (2).

## Patentansprüche

1. Industrieller Transporter (1) mit einer schwenkbaren Fahrerplattform (2), die von einer aufrechten Position zu einer abgesenkten Position schwenkbar ist, **dadurch gekennzeichnet, dass** der Transporter (1) ein Stützelement (13), an dem die Plattform (2) schwenkbar angebracht ist, ein Mittel (20a, 20b, 20a', 20b') zum Blockieren der Plattform (2) in einer bestimmten abgesenkten Position vom weiter hinunter gerichteten Schwenken aufweist, bei dem das Stützelement (13), wenn sich die Plattform in ihrer abgesenkten Position befindet, in der vertikalen Richtung elastisch bewegbar ist.

2. Industrieller Transporter gemäß Anspruch 1, bei dem das Stützelement (13) durch ein Federmittel (14) elastisch gestützt wird.

3. Industrieller Transporter gemäß Anspruch 2, bei dem das Federmittel (14) eine oder mehrere Spiralfedern aufweist.

4. Industrieller Transporter gemäß einem der Ansprüche 2 oder 3, bei dem das Federmittel (14) eine oder mehrere Progressivfedern sind.

5. Industrieller Transporter (1) gemäß einem der Ansprüche 2-4, bei dem das Federmittel (14) zum Stützen des Stützelements (13) an einem Rahmen (15) angeordnet ist, der am Transporter angebracht ist.

6. Industrieller Transporter (1) gemäß Anspruch 5, bei dem der Rahmen (15) ein Federhaltemittel (24) zum Halten des Federmittels (14) aufweist.

7. Industrieller Transporter (1) gemäß einem der Ansprüche 2-6, bei dem das Stützelement (13) zumindest einen Raum (17) zum Aufnehmen des Federmittels (14) aufweist.

8. Industrieller Transporter gemäß einem der Ansprüche 1-7, bei dem die Plattform (2) Anbringelemente (8a, 8b) zum schwenkbaren Anbringen der Plattform (2) am Stützelement (13) aufweist, und das Stützelement (13) zumindest einen mechanischen Anschlag (20a, 20b) aufweist, der die Anbringelemente (8a, 8b) in einer bestimmten abgesenkten Position blockieren kann.

9. Industrieller Transporter gemäß einem der Ansprüche 1-7, bei dem die Plattform Anbringelemente (8a, 8b) zum schwenkbaren Anbringen der Plattform am Stützelement (13) aufweist, wobei die Anbringelemente (8a, 8b) einen mechanischen Anschlag (20a', 20b') zum Blockieren der Plattform in einer bestimmten abgesenkten Position durch Interaktion mit dem Stützelement (13) aufweist.

10. Industrieller Transporter (1) gemäß einem der Ansprüche 1-9, bei dem die Bewegung des Stützelements (13) in der vertikalen Richtung durch Führungselemente (27a, 27b) geführt wird.

11. Industrieller Transporter (1) gemäß einem der Ansprüche 1-10, bei dem ein Betätigungselement (28, 32, 39) zum Schwenken der Plattform (2) zwischen dem Stützelement (13) und einem Vorderteil der Plattform (2) angeordnet ist.

12. Industrieller Transporter (1) gemäß Anspruch 11, bei dem das Betätigungselement (28, 32, 39) ein Linearaktuator ist.

13. Industrieller Transporter (1) gemäß Anspruch 11 oder 12, bei dem der Linearaktuator eine Gasfeder (28) ist, die die Plattform zur aufrechten Position schwenken kann, oder bei dem der Linearaktuator ein elektrischer Kugelgewinde-Linearaktuator (32) oder ein hydraulischer Linearaktuator (39) ist, der die Plattform zur abgesenkten Position schwenken kann und die Plattform zur aufrechten Position schwenken kann.

14. Industrieller Transporter (1) gemäß einem der Ansprüche 11-13, bei dem das Stützelement (13) einen Arm (26) aufweist, der sich in der vertikalen Richtung erstreckt, wobei ein Ende des Betätigungselements (28, 32, 39) am Arm (26) angebracht ist und das andere Ende des Betätigungselements (28, 32, 39) an einem Vorsprungsabschnitt (10a, 10b) einer Anbringung (8a, 8b) der Plattform (2) angebracht ist.

## Revendications

1. Chariot de manutention (1) comprenant une plateforme conducteur pivotante (2) qui pivote à partir d'une position droite vers une position abaissée, **caractérisé en ce que** le chariot (1) comprend un élément de support (13) auquel la plateforme (2) est fixée de manière pivotante, des moyens (20a, 20b, 20a', 20b') destinés à bloquer la plateforme (2) dans une position abaissée prédéterminée afin d'empêcher une poursuite du pivotement dirigé vers le bas, dans lequel l'élément de support (13) peut se déplacer de manière élastique dans la direction verticale lorsque la plateforme se trouve dans sa position abaissée.

2. Chariot de manutention selon la revendication 1, dans lequel l'élément de support (13) est supporté de manière élastique par des moyens formant ressort (14).

3. Chariot de manutention selon la revendication 2, dans lequel les moyens formant ressort (14) comprennent un ou plusieurs ressorts hélicoïdaux.

4. Chariot de manutention selon l'une quelconque des revendications 2 ou 3, dans lequel les moyens formant ressort (14) sont un ou plusieurs ressorts progressifs.

5. Chariot de manutention (1) selon l'une quelconque des revendications 2 à 4, dans lequel les moyens formant ressort (14) destinés à supporter l'élément de support (13) sont agencés sur un bâti (15) qui est fixé au chariot.

6. Chariot de manutention (1) selon la revendication 5, dans lequel le bâti (15) comprend des moyens de maintien de ressort (24) destinés à maintenir les moyens formant ressort (14).

7. Chariot de manutention (1) selon l'une quelconque des revendications 2 à 6, dans lequel l'élément de support (13) comprend au moins un espace (17) destiné à recevoir les moyens formant ressort (14).

8. Chariot de manutention selon l'une quelconque des revendications 1 à 7, dans lequel la plateforme (2) comprend des éléments de fixation (8a, 8b) destinés à fixer de manière pivotante la plateforme (2) à l'élément de support (13) et l'élément de support (13) comprend au moins un arrêt mécanique (20a, 20b) agencé pour bloquer les éléments de fixation (8a, 8b) dans une position abaissée prédéterminée.

9. Chariot de manutention selon l'une quelconque des revendications 1 à 7, dans lequel la plateforme comprend des éléments de fixation (8a, 8b) destinés à fixer de manière pivotante la plateforme à l'élément de support (13), dans lequel les éléments de fixation (8a, 8b) comprennent un arrêt mécanique (20a', 20b') destiné à bloquer la plateforme (2) dans une position abaissée prédéterminée grâce à une interaction avec l'élément de support (13).

10. Chariot de manutention (1) selon l'une quelconque des revendications 1 à 9, dans lequel le déplacement de l'élément de support (13) est guidé dans la direction verticale par des éléments de guidage (27a, 27b).

11. Chariot de manutention (1) selon l'une quelconque des revendications 1 à 10, dans lequel un élément opérationnel (28, 32, 39) destiné à faire pivoter la plateforme (2) est agencé entre l'élément de support (13) et une partie avant de la plateforme (2).

12. Chariot de manutention (1) selon la revendication 11, dans lequel l'élément opérationnel (28, 32, 39) est un actionneur linéaire.

13. Chariot de manutention (1) selon la revendication 11 ou 12, dans lequel l'actionneur linéaire est un ressort à gaz (28) agencé pour faire pivoter la plateforme vers la position droite, ou dans lequel l'actionneur linéaire est un actionneur électrique linéaire à vis à billes (32) ou un actionneur linéaire hydraulique (39) agencé pour faire pivoter la plateforme vers la position abaissée et pour faire pivoter la plateforme vers la position droite.

14. Chariot de manutention (1) selon les revendications 11 à 13, dans lequel l'élément de support (13) comprend un bras (26) qui s'étend dans la direction verticale, dans lequel une extrémité de l'élément opérationnel (28, 32, 39) est fixée au bras (26) et l'autre extrémité de l'élément opérationnel (28, 32, 39) est fixée à une partie faisant saillie (10a, 10b) d'un dispositif de fixation (8a, 8b) de la plateforme (2).
